# EUROPÄISCHE PATENTSCHRIFT

(11) **EP 3 235 677 B1**
(45) Veröffentlichungstag und Bekanntmachung des Hinweises auf die Patenterteilung: **21.10.2020**
(21) Anmeldenummer: 17164730.8
(22) Anmeldetag: 04.04.2017
(51) Int. Cl.: B60L 15/20, H02P 1/46, H02P 1/50

(54) **VERFAHREN ZUR LAGEGEBERLOSEN REGELUNG EINES ELEKTROANTRIEBS**
METHOD FOR CONTROLLING AN ELECTRIC DRIVE WITHOUT A POSITION ENCODER
PROCÉDÉ DE RÉGLABLE SANS CODEUR DE POSITION D'UN MOTEUR ÉLECTRIQUE

(30) Priorität: 18.04.2016 DE 102016206494
(43) Veröffentlichungstag der Anmeldung: 25.10.2017
(73) Patentinhaber: VOLKSWAGEN AKTIENGESELLSCHAFT, 38440 Wolfsburg (DE)
(72) Erfinder: Kunzler, Rolf, 30459 Hannover (DE); Kasper, Roland, 39326 Samswegen (DE)

(56) Entgegenhaltungen:
- EP-A1- 2 023 479
- WO-A2-2005/067552
- WO-A2-2005/100777
- US-A1- 2004 046 519
- US-A1- 2008 108 469
- OSCAR CABRAL FERREIRA ET AL: "Encoderless Control of Industrial Servo Drives", POWER ELECTRONICS AND MOTION CONTROL CONFERENCE, 2006. EPE-PEMC 2006. 12TH INTERNATIONAL, IEEE, PISCATAWAY, NJ, USA, 30. August 2006 (2006-08-30), Seiten 1962-1967, XP031421911, ISBN: 978-1-4244-0121-5

## Beschreibung

Die Erfindung betrifft ein Verfahren zur lagegeberlosen Regelung eines Elektroantriebs, insbesondere für einen Elektroantrieb, der als Antriebseinheit in einem Antriebsstrang eingesetzt wird, bevorzugt in einem Antriebsstrang eines Kraftfahrzeugs.

Elektroantriebe werden in wachsender Zahl in Kraftfahrzeugen als Antriebseinheiten verbaut, entweder als alleinige Antriebseinheit oder in Kombination mit weiteren Elektroantrieben, Verbrennungskraftmaschinen oder ähnlichem. Dabei ist eine genaue Steuerung/Regelung der Drehzahl und des Drehmoments des Elektroantriebs notwendig. Diese ist nur bei genauer Kenntnis der tatsächlichen Drehzahl des Rotors und/oder der Lage des Rotors möglich. Zur Ermittlung von Lage und Drehzahl des Rotors können speziell eingerichtete Sensoren (z. B. Resolver und/oder Hall-Sensoren) vorgesehen sein. Der Elektroantrieb kann demnach durch die mittels des Sensors (auch "Lagegeber" genannt) ermittelte Werte geregelt werden. Die Bereitstellung und der Betrieb der Sensoren erfordern jedoch zusätzliche Bauteile und entsprechende elektrische Schaltungen, die die Komplexität des Antriebsstranges erhöhen und die Lebensdauer beeinträchtigen können.

Es sind daher auch sogenannte "lagegeberlose" Regelungen eines Elektroantriebes bekannt, z. B. aus der EP 2 023 479 A1. Dort wird ein Verfahren zur Ermittlung der elektrischen Antriebs-Geschwindigkeit und/oder der Lage bei einem Permanentmagnetläufer einer elektrischen bürstenlosen Maschine (Elektroantrieb) offenbart. Weiter wird dort auf die bekannten Verfahren zur Ermittlung der Drehzahl und Lage verwiesen, die in Abhängigkeit von der aktuell vorliegenden Drehzahl angewendet werden können. So ist bekannt, dass bei höheren Drehzahlen ein sogenanntes EMK-Verfahren angewendet wird. Bei höheren Drehzahlen ist die von den Dauermagneten auszuwertende, induzierte Spannung/Rotor-Rück-EMK (EMK = elektromagnetische Kraft) noch genügend groß, so dass hier eine Bestimmung der tatsächlichen Drehzahl und Lage erfolgen kann. Das EMK-Verfahren ist ein passives Verfahren, d. h. die zur Bestimmung der Drehzahl verwendeten Größen (im Wesentlichen werden Strom und Spannung gemessen) können im normalen Betrieb gemessen werden. Bei niedrigeren Drehzahlen wird ein sog. Anisotropie-Verfahren angewendet, bei dem in die Statorströme hochfrequente Testsignale injiziert werden. Insbesondere wird den Statorströmen ein hochfrequentes Testsignal bestimmter Trägerfrequenz eingeprägt bzw. überlagert und mittels eines Demodulators mit Bandpass und einem Nachführregler die Rotorlage berechnet; also Erzeugen eines Testsignals und Auswertung der Statorströme). Für dieses Verfahren müssen also Testsignale generiert werden, um die zur Bestimmung der Drehzahl erforderlichen Größen zu bestimmen. Es handelt sich hier also nicht um ein passives Verfahren. Dieses Anisotropie-Verfahren funktioniert allerdings nur bei einem ausreichenden Induktivitätsunterschied zwischen Längs- und Querachse des Rotors. Aus der EP 2 023 479 A1 ist nun ein Fusions-Verfahren zur Kombination des EMK-Verfahrens mit dem Anisotropie-Verfahren bekannt, durch den eine Bestimmung der Drehzahl auch in dem Übergangs-Drehzahlbereich möglich ist. Hinsichtlich weiterer technischer Details zum Fusions-Verfahrens, des EMK-Verfahrens und/oder des Anisotropie-Verfahrens wird hier der diesbezügliche Inhalt der EP 2 023 479 A1 vollumfänglich in Bezug genommen und auf die in der EP 2 023 479 A1 genannten Fachartikel zum EMK-Verfahren (in "Elektrotechnik und Informationstechnik, Nr. 2/2000, Geregelte Antriebe, Seiten 103 bis 112 von M. Schrödl und E. Robeischl") und zum Anisotropieverfahren ("O.C. Ferreira, R. Kennel, Encoderless control of industrial servo drives, 12th International Power Electronics and Motion Control Conference, August 2006, Seiten 1962 bis 1967") verwiesen.

Es wurde nunmehr herausgefunden, dass gerade bei hochausgenutzten Elektroantrieben der Anspruch besteht, den Elektroantrieb auch im oder nahe des Sättigungsbereich betreiben zu können, wie es bei Anwendungen in Kraftfahrzeugen als Antriebseinheit häufig der Fall ist, um ein Verhältnis von erzeugbarem Drehmoment zu notwendigem Bauraum zu erhöhen. In diesem Sättigungsbereich gleichen sich die Induktivitäten der Längsachse und der Querachse des Rotors zunehmend einander an. Das geschilderte Anisotropie-Verfahren kann dann nicht mehr zuverlässig angewendet werden. Damit ergibt sich jedoch bei niedrigen Drehzahlen in dem Sättigungsbereich ein Zustand, in dem eine lagegeberlose Regelung nicht erfolgen kann, weil Werte für Lage und/oder Drehzahl nicht mit hinreichender Genauigkeit errechnet werden können.

Aus der US 2008/108469 A1 ist ein Pumpenantrieb bekannt, wobei die Pumpe von einer Antriebseinheit eines Kraftfahrzeuges antreibbar ist, wobei zwischen Pumpe und Antriebseinheit eine Freilaufkupplung angeordnet ist, die ein Drehmoment der Antriebseinheit nur bis zu einer Grenzdrehzahl auf die Pumpe überträgt.

Aus der WO 2005/100777 A2 ist ein Verfahren zum Starten eines Verbrennungsmotors über einen Elektroantrieb bekannt. Dabei wird die Lage der Kurbelwelle anhand der Lageregelung des Elektroantriebs bestimmt.

Hiervon ausgehend liegt der vorliegenden Erfindung die Aufgabe zugrunde, die aus dem Stand der Technik bekannten Probleme zumindest teilweise zu lindern oder zu beseitigen. Insbesondere soll ein Verfahren zu lagegeberlosen Regelung eines Elektroantriebs bereitgestellt werden, bei dem über den gesamten Betriebsbereich eines Elektroantriebs eine Berechnung der Lage und/oder der Drehzahl des Elektroantriebs (des Rotors) und damit eine Regelung der Drehzahl des Elektroantriebs möglich ist.

Dies wird mit einem Verfahren gemäß den Merkmalen des Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Hierzu trägt ein Verfahren nach Patentanspruch 1 zur (lagegeberlosen) Regelung eines Elektroantriebs in einem Antriebsstrang bei. Der Antriebstrang weist zumindest den Elektroantrieb an einer Antriebsseite, eine Abtriebsseite sowie dazwischen angeordnet eine Kupplung zur lösbaren drehmomentübertragenden Verbindung von Antriebsseite und Abtriebsseite auf. Das Verfahren umfasst dabei die Schritte nach Patentanspruch 1, und insbesondere:
a. Abschätzen oder (rechnerisches) Bestimmen einer aktuellen ersten Drehzahl des Elektroantriebs; und
b. Vergleichen der aktuellen ersten Drehzahl mit einer (vorgegebenen und/oder gespeicherten) Mindestdrehzahl, und, wenn
   i. die aktuelle erste Drehzahl kleiner als eine Mindestdrehzahl ist, oder
   ii. zusätzlich ein aktuelles Drehmoment des Elektroantriebs größer ist als ein Grenzmoment
c. Beschleunigen des Elektroantriebs auf mindestens die Mindestdrehzahl und Regelung einer abtriebsseitigen zweiten Drehzahl und/oder eines abtriebsseitigen Drehmoments durch zumindest teilweises Öffnen der Kupplung.

Mit anderen Worten heißt dass insbesondere, dass Schritt c. durchgeführt wird, wenn jedenfalls die Bedingung i. erfüllt ist. Optional kann auch vorgesehen sein, dass zusätzlich zur Bedingung i. noch die Bedingung ii. abgefragt und/oder erfüllt sein muss, bevor Schritt c. durchgeführt wird. Ob die Bedingung ii. abgefragt wird und/oder erfüllt wird, kann (ggf. in Abhängigkeit des aktuellen Zustands des Elektroantriebs und/oder des Antriebsstranges) vorgegeben werden.

Dabei stellt der Elektroantrieb die Antriebsseite dar, die durch eine Kupplung von der Abtriebsseite trennbar angeordnet ist. Die Kupplung ist z. B. eine Reibungskupplung wie sie dem Fachmann, insbesondere in Anwendungen in Kraftfahrzeugen, bekannt ist. Die Kupplung ist insbesondere geeignet, ein Drehmoment der Antriebsseite vollständig (bei geschlossener Kupplung), gar nicht (bei vollständig geöffneter Kupplung) oder nur teilweise (bei teilweise geöffneter Kupplung, also Betrieb der Kupplung mit Schlupf) zur Abtriebsseite zu übertragen.

Die aktuelle erste Drehzahl ist insbesondere die vermutete Drehzahl des Elektroantriebs, die also insbesondere nicht durch ein EMK-Verfahren oder durch ein Anisotropie-Verfahren genau bestimmbar ist. Die aktuelle erste Drehzahl kann auch "0" Umdrehungen pro Minute betragen, wobei dann von einem Stillstand des Elektroantriebs ausgegangen wird.

Die Mindestdrehzahl ist die Drehzahl des Elektroantriebs, ab der eine (hinreichend genaue) Berechnung der Drehzahl (im Folgenden als vierte Drehzahl bezeichnet) und Lage des Rotors durch ein EMK-Verfahren möglich ist. Ab dieser Mindestdrehzahl kann, aufgrund der Kenntnis der Lage und der Drehzahl des Rotors, an dem Elektroantrieb ein benötigtes Drehmoment eingestellt werden (bzw. zu einem maximal möglichen Drehmoment des Elektroantriebs).

Das Grenzmoment ist das Drehmoment, bis zu dem ein ausreichender Unterschied zwischen der Induktivität der Längsachse und der Querachse des Rotors vorliegt. Bis zu diesem Grenzmoment kann also, bis zu einer Mindestdrehzahl ausgehend vom Stillstand des Rotors, die Lage und die Drehzahl des Elektroantriebs hinreichend genau durch das Anisotropie-Verfahren berechnet werden (im Folgenden als dritte Drehzahl bezeichnet).

Das aktuelle Drehmoment ist das durch die Abtriebsseite aktuell geforderte Drehmoment. Das Drehmoment des Elektroantriebs kann insbesondere nur unter Kenntnis der Lage und der Drehzahl des Rotors bestimmt und eingestellt werden

Es wird hier also vorgeschlagen, dass der Bereich der Drehzahl des Elektroantriebs, in dem eine Berechnung z. B. mittels des EMK-Verfahrens nicht mit hinreichender Genauigkeit möglich ist (also (erste) Drehzahl kleiner Mindestdrehzahl) durch eine Beschleunigung des Elektroantriebs bis auf eine Drehzahl, die mindestens der Mindestdrehzahl entspricht, möglichst schnell überbrückt wird. Bis zum Erreichen der Mindestdrehzahl wird die abtriebsseitige zweite Drehzahl durch zumindest teilweises Öffnen der Kupplung geregelt. Dieser Betrieb der Kupplung unter Schlupf verursacht insbesondere Energieverluste und Verschleiß der Kupplungsbeläge. Durch eine schnelle Überbrückung des oben genannten Bereichs der Drehzahl können diese negativen Effekte aber minimiert werden.

Insbesondere kann so vollständig von der Anwendung eines Anisotropie-Verfahrens Abstand genommen werden.

Die abtriebsseitige zweite Drehzahl bzw. das abtriebsseitige Drehmoment wird durch zumindest teilweises Öffnen der Kupplung geregelt. D.h. die Abtriebsseite wird nicht zusammen mit der Antriebseite beschleunigt, sondern kann (im Wesentlichen) unabhängig von der Antriebseite auf die gewünschte zweite Drehzahl bzw. das abtriebsseitige Drehmoment geregelt werden.

Diese Regelung der Abtriebsseite kann z. B. mit Hilfe von mindestens einem Drehzahlsensor erfolgen, der z. B. in Kraftfahrzeugen üblicherweise auf der Abtriebsseite vorgesehen ist. Die Regelung der Drehzahl der Abtriebsseite wird dabei also durch eine Betätigung der Kupplung vorgenommen. Das Drehmoment auf der Abtriebsseite kann über den "Öffnungsgrad" der Kupplung geregelt werden.

Weiter kann das Verfahren dann angewendet werden, wenn der Elektroantrieb im Sättigungsbereich betrieben wird und die Drehzahl des Elektroantriebs kleiner als die Mindestdrehzahl ist, da in diesem Bereich (im Folgenden als dritter Bereich bezeichnet) mit dem Anisotropie-Verfahren keine hinreichend genauen Werte für Lage und/oder Drehzahl berechenbar sind (also aktuelles Drehmoment größer als Grenzmoment und aktuelle erste Drehzahl kleiner als Mindestdrehzahl).

Bevorzugt umfasst das Verfahren, wenn die aktuelle erste Drehzahl kleiner als eine Mindestdrehzahl ist und das aktuelle Drehmoment dem Grenzmoment entspricht oder kleiner ist, den folgenden Schritt:
d. Berechnen einer tatsächlichen dritten Drehzahl des Elektroantriebs und insbesondere der Lage des Rotors durch ein Anisotropie-Verfahren (insbesondere indem in die Statorströme hochfrequente Testsignale injiziert werden; also Erzeugen eines Testsignals und Auswertung der Statorströme) und Regelung des Elektroantriebs anhand der so berechneten dritten Drehzahl und der Lage des Rotors.

Hier wird also vorgeschlagen, in einem geeigneten Bereich (im Folgenden als erster Bereich bezeichnet) das Anisotropie-Verfahren anzuwenden und so eine tatsächliche dritte Drehzahl und Lage des Rotors des Elektroantriebs zu berechnen (also aktuelles Drehmoment ist kleiner oder entspricht dem Grenzmoment und aktuelle erste Drehzahl kleiner als Mindestdrehzahl).

Die tatsächliche dritte Drehzahl ist also eine Drehzahl des Elektroantriebs, die durch das Anisotropie-Verfahren mit hinreichender Genauigkeit berechnet wurde.

Insbesondere umfasst das Verfahren, sobald die erste Drehzahl mindestens der Mindestdrehzahl entspricht, zumindest den weiteren folgenden Schritt:
e. Berechnen einer tatsächlichen vierten Drehzahl des Elektroantriebs und insbesondere der Lage des Rotors durch ein EMK-Verfahren (insbesondere indem aus dem Einfluss einer den Statorstrom beeinflussenden Rotor-Rück-EMK die Rotorgeschwindigkeit und die Rotorlage berechnet wird; also Auswertung einer den Statorstrom beeinflussenden Läufer-Rück-EMK) und Regelung des Elektroantriebs anhand der so berechneten vierten Drehzahl und der Lage des Rotors.

Wird also festgestellt, dass die erste Drehzahl mindestens der Mindestdrehzahl entspricht, kann das EMK-Verfahren mit hinreichender Genauigkeit durchgeführt werden. Die tatsächliche vierte Drehzahl ist also eine Drehzahl des Elektroantriebs, die durch das EMK-Verfahren mit hinreichender Genauigkeit berechnet wurde.

Es wird damit vorgeschlagen, in einem geeigneten Bereich (im Folgenden als zweiter Bereich bezeichnet) das EMK-Verfahren anzuwenden und so eine tatsächliche vierte Drehzahl des Elektroantriebs und insbesondere eine Lage des Rotors zu berechnen (also aktuelle erste Drehzahl entspricht mindestens der Mindestdrehzahl).

Gemäß einer weiteren Ausgestaltung des Verfahrens wird vorgeschlagen, dass die aktuelle erste Drehzahl des Elektroantriebs unter Berücksichtigung einer zweiten Drehzahl der Abtriebsseite abgeschätzt oder bestimmt wird. Diese Abschätzung ist möglich, solange die Kupplung zumindest teilweise geschlossen ist und ein Drehmoment zwischen Antriebsseite und Abtriebsseite übertragen wird.

Gemäß einer anderen Ausgestaltung des Verfahrens wird vorgeschlagen, dass die aktuelle erste Drehzahl des Elektroantriebs in einem ersten Versuch immer zunächst mit dem EMK-Verfahren bestimmt/abgeschätzt wird. Sollte jedoch festgestellt werden, dass die induzierte Spannung/Rotor-Rück-EMK zur Bestimmung der vierten Drehzahl zu gering ist, kann das Anisotropie-Verfahren angewendet werden.

Bestimmen heißt hier insbesondere, dass die aktuelle erste Drehzahl tatsächlich ermittelt wird (z. B. wenn die Abtriebsseitige Drehzahl durch einen Sensor bekannt ist und die Kupplung geschlossen ist). Abschätzen heißt dementsprechend insbesondere, dass eine Bestimmung eines tatsächlich vorliegenden Wertes nicht möglich ist und nur ein ungefährer Wert z. B. der aktuellen ersten Drehzahl bereitgestellt werden kann, z. B. bei nur teilweise geschlossener Kupplung, durch Auswertung der elektrischen Größen(z. B. Strom, Spannung, etc.) des Elektromotors oder bei Berechnung durch eines der oben genannten Verfahren, wenn die aktuelle erste Drehzahl kleiner als die Mindestdrehzahl ist (EMK- bzw. Anisotropie-Verfahren).

Im Regelfall ist der Ausgangspunkt für das Verfahren jedoch der stehende Elektroantrieb, also Drehzahl des Elektroantriebs gleich "0" Umdrehungen pro Minute. Ausgehend von diesem Zustand kann zu jedem Zeitpunkt die Lage und/oder Drehzahl zunächst mit dem Anisotropie-Verfahren (Berechnung der dritten Drehzahl) und, ab Erreichen der Mindestdrehzahl, mit dem EMK-Verfahren (Berechnung der vierten Drehzahl) berechnet werden.

Der oben beschriebene dritte Bereich kann so gezielt umgangen werden, in dem der Elektroantrieb auf die Mindestdrehzahl beschleunigt und die Kupplung ggf. teilweise geöffnet wird.

Weiter wird also ein Verfahren vorgeschlagen, wobei ausgehend von einem Stillstand des Elektroantriebs der Elektroantrieb auf die Mindestdrehzahl beschleunigt wird und, sobald mindestens die Mindestdrehzahl erreicht ist, eine tatsächliche vierte Drehzahl durch ein EMK-Verfahren errechnet wird, wobei eine zweite Drehzahl oder ein Drehmoment der Abtriebsseite bis zum Erreichen mindestens der Mindestdrehzahl über die zumindest teilweise Öffnung der Kupplung geregelt wird.

Insbesondere wird die zweite Drehzahl durch einen Drehzahlsensor an der Abtriebsseite bestimmt.

Es wird insbesondere ein Verfahren vorgeschlagen zur lagegeberlosen Regelung eines Elektroantriebs in einem Antriebsstrang, der zumindest den Elektroantrieb als eine Antriebsseite, eine Abtriebsseite sowie dazwischen angeordnet eine Kupplung, zur lösbaren drehmomentübertragenden Verbindung von Antriebsseite und Abtriebsseite, aufweist; zumindest umfassend die folgenden (aufeinanderfolgenden) Schritte:
a. Abschätzen oder Bestimmen einer aktuellen ersten Drehzahl des Elektroantriebs; und
b. Vergleichen der aktuellen ersten Drehzahl mit einer Mindestdrehzahl,
wobei, wenn die aktuelle erste Drehzahl kleiner als die Mindestdrehzahl ist,
c1. Beschleunigen des Elektroantriebs auf mindestens die Mindestdrehzahl und Regelung einer abtriebsseitigen zweiten Drehzahl oder eines abtriebsseitigen Drehmoment durch zumindest teilweises Öffnen der Kupplung; oder
c2. Vergleichen des aktuellen Drehmoments des Elektroantriebs mit einem Grenzmoment ;
wobei, wenn das aktuelle Drehmoment größer als das Grenzmoment ist,
x) Durchführen der Schritte c1. und e. (nacheinander); oder, wenn das aktuelle Drehmoment dem Grenzmoment entspricht oder kleiner ist
y) Berechnen einer tatsächlichen dritten Drehzahl des Elektroantriebs durch ein Anisotropie-Verfahren und Regelung des Elektroantriebs anhand der so berechneten dritten Drehzahl;
oder, wenn die aktuelle erste oder dritte Drehzahl der Mindestdrehzahl entspricht oder größer ist, und nachfolgend zu Schritt c1.;
e. Berechnen einer aktuellen vierten Drehzahl des Elektroantriebs durch ein EMK-Verfahren und Regelung des Elektroantriebs anhand der so berechneten vierten Drehzahl.

Es wird weiter ein Antriebsstrang nach Patentanspruch 6 vorgeschlagen.

Die Regeleinheit ist also z. B. über Regelleitungen mit dem Elektroantrieb, ggf. mit der Kupplung und/oder mit einem Drehzahlsensor an der Antriebsseite so verbunden, dass die zur Bestimmung der ersten, zweiten, dritten, vierten Drehzahl, der aktuellen Drehmomente usw. erforderlichen Größen erfasst und verarbeitet werden können.

Bei dem Antriebsstrang ist insbesondere der Elektroantrieb lagegeberlos, so dass eine Lage und eine Drehzahl eines Rotors des Elektroantriebs ausschließlich durch ein EMK-Verfahren oder zusätzlich durch ein Anisotropie-Verfahren berechenbar ist.

Weiter wird vorgeschlagen, dass der Antriebsstrang ein Teil einer Antriebskomponente zum Antrieb eines Kraftfahrzeuges ist. Die Antriebskomponente kann z. B. eine oder mehrere weitere Antriebseinheiten (Elektroantriebe, Verbrennungskraftmaschinen, usw.), Räder, Getriebe, Differentiale, Achsen, Gelenke etc. umfassen.

Zudem wird ein Kraftfahrzeug mit einem erfindungsgemäßen Antriebstrang vorgeschlagen.

Die Ausführungen zu dem Verfahren gelten gleichermaßen für den Antriebsstrang und das Kraftfahrzeug und umgekehrt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: ein Kraftfahrzeug mit einem Antriebsstrang in einer Draufsicht;
- Fig. 2:: ein erstes Diagramm, in dem der Verlauf eines Drehmoments über der Drehzahl dargestellt ist;
- Fig. 3:: ein zweites Diagramm, in dem der Verlauf eines Drehmoments über der Drehzahl dargestellt ist; und
- Fig. 4:: ein drittes Diagramm in dem der Verlauf der Drehzahl und des Kupplungswegs (des Kupplungszustands) über der Zeit dargestellt ist.

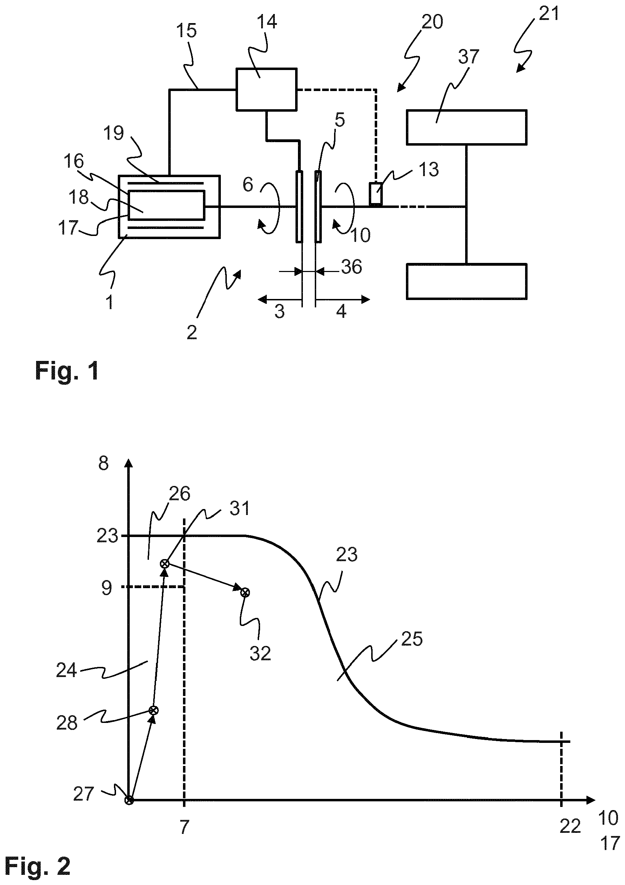

Fig. 1 zeigt ein Kraftfahrzeug 21 mit einer Antriebskomponente 20, die einen Antriebsstrang 2 sowie Räder 37 umfasst. Der Antriebsstrang 2 umfasst einen Elektroantrieb 1 als Antriebsseite 3, eine Abtriebsseite 4 (mit den Rädern 37 verbunden) sowie dazwischen angeordnet eine Kupplung 5, zur lösbaren drehmomentübertragenden Verbindung von Antriebsseite 3 und Abtriebsseite 4. Die Kupplung 5 ist hier in einem geöffneten Zustand 36 dargestellt (also: Kupplung maximal geöffnet 36).

Eine Regeleinheit 14, die zur Durchführung des Verfahrens geeignet ist, ist zur Erfassung der für ein EMK-Verfahren und/oder Anisotropie-Verfahren benötigten Größen 15 mit dem Elektroantrieb 1 verbunden. Die Regeleinheit 14 ist über Regelleitungen mit dem Elektroantrieb 1, mit der Kupplung 5 und mit einem Drehzahlsensor 13 an der Antriebsseite 4 so verbunden, dass die zur Bestimmung der ersten, zweiten, dritten, vierten Drehzahl, der aktuellen Drehmomente usw. erforderlichen Größen 15 erfasst und verarbeitet werden können.

Bei dem Antriebsstrang 2 ist der Elektroantrieb 1 lagegeberlos, so dass eine Lage 16 und eine Drehzahl 17 eines Rotors 18 des Elektroantriebs 1 gegenüber dem Stator 19 ausschließlich durch ein EMK-Verfahren oder zusätzlich durch ein Anisotropie-Verfahren berechenbar ist.

Die zweite Drehzahl 10 der Abtriebsseite 4 wird über den Drehzahlsensor 13 gemessen. Die erste Drehzahl 6, dritte Drehzahl 11 und vierte Drehzahl 12 sind Drehzahlen 17 der Antriebsseite 3 bzw. des Rotors 18 des Elektroantriebs 1.

Fig. 2 zeigt ein erstes Diagramm, in dem der Verlauf eines Drehmoments 8 über der zweiten Drehzahl 10 der Abtriebsseite 4 dargestellt ist;

Die durchgezogene Linie bezeichnet den Verlauf des maximalen Drehmoments 23 des Elektroantriebs 1 in Abhängigkeit von der Drehzahl 17 des Elektroantriebs 1. Unterhalb dieser Linie sind drei Bereiche 24, 25, 26 angeordnet. In dem ersten Bereich 24 kann das Anisotropie-Verfahren angewendet werden und so eine tatsächliche dritte Drehzahl 11 des Elektroantriebs 1 berechnet werden. Dieser erste Bereich 24 ist dadurch definiert, dass ein aktuelles Drehmoment 8 dem Grenzmoment 9 entspricht oder kleiner ist und die Drehzahl 17 des Elektroantriebs 1 kleiner ist als die Mindestdrehzahl 7 des Elektroantriebs 1. Der zweite Bereich 25 ist dadurch definiert, dass die Drehzahl 17 des Elektroantriebs mindestens der Mindestdrehzahl 7 entspricht. In diesem zweiten Bereich 25 kann das EMK-Verfahren mit hinreichender Genauigkeit durchgeführt werden. Der dritte Bereich 26 ist dadurch definiert, dass der Elektroantrieb 1 im Sättigungsbereich betrieben wird (aktuelles Drehmoment 8 ist größer als Grenzmoment 23) und die Drehzahl 17 des Elektroantriebs 1 kleiner als die Mindestdrehzahl 7 ist.

Hier sind unterschiedliche Betriebspunkte 27, 28, 31, 32 der Abtriebsseite 4 dargestellt. Im ersten Betriebspunkt 27 steht der Rotor 18 des Elektroantriebs 1 (0 Umdrehungen pro Minute). Im zweiten Betriebspunkt 28 kann die Drehzahl 17 des Elektroantriebs 1 durch ein Anisotropie-Verfahren bestimmt werden (als dritte Drehzahl 11). In dem fünften Betriebspunkt 31 kann weder Drehzahl 17 noch Lage 16 des Rotors 18 bestimmt werden, da der fünfte Betriebspunkt 31 der Abtriebsseite 4 (und bei geschlossener Kupplung 5 auch fünfter Betriebspunkt 31 der Antriebsseite 3) im dritten Bereich 26 liegt. Im sechsten Betriebspunkt 32 kann die Drehzahl 17 des Elektroantriebs 18 durch das EMK-Verfahren bestimmt werden, da dieser sechste Betriebspunkt im zweiten Bereich 25 angeordnet ist.

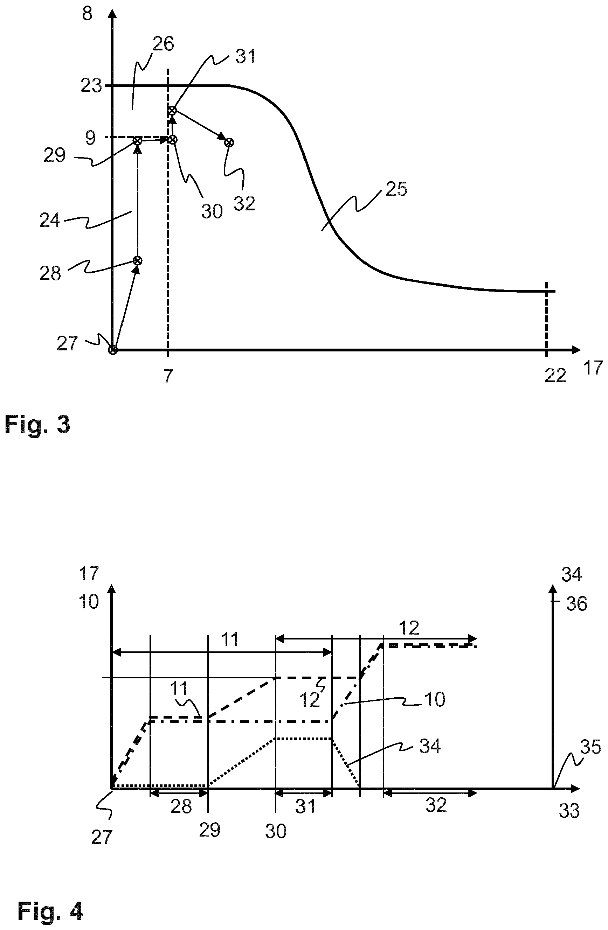

Fig. 3 zeigt ein zweites Diagramm, in dem der Verlauf eines Drehmoments 8 über der Drehzahl 17 dargestellt ist. Hier ist dargestellt, wie die auf der Abtriebsseite 4 geforderten (z. B. durch die Stellung eines Gaspedals eines Kraftfahrzeuges 21) Betriebspunkte 27, 28, 31, 32 auf der Antriebsseite 3 durch das Verfahren eingestellt werden.

In Bezug auf den ersten und zweiten Betriebspunkt 27, 28 wird auf die Ausführungen zu Fig. 2 verwiesen. Der fünfte Betriebspunkt 31 der Abtriebsseite 4 (siehe Fig. 2) wird nun durch die folgenden Betriebspunkte: dritter Betriebspunkt 29, vierter Betriebspunkt 30 und fünfter Betriebspunkt 31 der Antriebsseite 3 realisiert.

Hier wird der dritte Bereich 26 durch Beschleunigen des Elektroantriebs 1 auf mindestens die Mindestdrehzahl 7 umgangen. Dabei wird die abtriebsseitige zweite Drehzahl 10 (siehe Fig. 2; dort liegt im fünften Betriebspunkt 31 die zweite Drehzahl 10 vor) und/oder das abtriebsseitige Drehmoment durch zumindest teilweises Öffnen der Kupplung 5 geregelt. Weiter wird, nach Erreichen der Mindestdrehzahl 7 (vierter Betriebspunkt 30 des Elektroantriebs 1), das Drehmoment 8 über das Grenzmoment 9 erhöht, so dass an der Abtriebsseite 4 das geforderte Drehmoment 8 bereitgestellt werden kann (siehe fünfter Betriebspunkt 31 des Elektroantriebs 1). Im sechsten Betriebspunkt 32 ist die Kupplung 5 wieder vollständig geschlossen und die Regelung der Drehzahl 17 kann über das EMK-Verfahren erfolgen.

In den Betriebspunkten 27, 28 und 29 wird die Drehzahl 17 durch das Anisotropie-Verfahren bestimmt (als errechnete dritte Drehzahl 11). In den Betriebspunkten 30, 31, und 32 wird die Drehzahl 17 des Elektroantriebs 1 durch das EMK-Verfahren bestimmt (als errechnete vierte Drehzahl 12).

Wie oben ausgeführt, ist es auch möglich den Elektroantrieb 1, ausgehend vom ersten Betriebspunkt 27, auf die Mindestdrehzahl 7 zu beschleunigen und dabei die Kupplung 5 zumindest teilweise zu öffnen. So kann die zweite Drehzahl 10 der Abtriebsseite 4 über die Kupplung 5 und einen Drehzahlsensor 13 der Abtriebsseite 4 geregelt werden, wobei die Drehzahl 17 der Antriebsseite 3 in den Betriebspunkten 28, 29, 30, 31 und 32 (liegen dann alle im zweiten Bereich 25) durch das EMK-Verfahren errechnet wird.

Fig. 4 zeigt ein drittes Diagramm in dem der Verlauf der Drehzahl 17 und des Kupplungswegs 34 (des Kupplungszustands 35, 36) über der Zeit 33 dargestellt ist. Es wird auf die Ausführungen zu Fig. 2 und 3 verwiesen.

Die gepunktete Linie stellt den jeweiligen Kupplungsweg 34 (zwischen Kupplung geschlossen 35 und Kupplung maximal geöffnet 36) dar. In dem Bereich zwischen den Kupplungszuständen 35 und 36 ist die Kupplung 5 teilweise geöffnet und ein Drehmoment 8 wird nur teilweise übertragen.

Die strich-punktierte Linie stellt den Verlauf der zweiten Drehzahl 10 der Abtriebsseite 4 in den einzelnen Betriebspunkten 27, 28, 31, 32 dar (siehe auch Fig. 2).

Die gestrichelte Linie stellt den Verlauf der tatsächlichen Drehzahl 17 des Elektroantriebs 1, bzw. der berechneten dritten Drehzahl 11 (mittels Anisotropie-Verfahren) und vierten Drehzahl 12 (mittels EMK-Verfahren) dar. Dabei wird auch verdeutlicht, dass die Drehzahl 17 der in der Nähe der Mindestdrehzahl 7 liegenden Betriebspunkte 30 und 31 sowohl mit dem Anisotropie-Verfahren als auch mit dem EMK-Verfahren (oder einem kombinierten Verfahren) bestimmt werden können.

## Patentansprüche

1. Verfahren zur Regelung eines Elektroantriebs (1) in einem Antriebsstrang (2), der zumindest den Elektroantrieb (1) an einer Antriebsseite (3), eine Abtriebsseite (4) sowie dazwischen angeordnet eine Kupplung (5), die eine Reibungskupplung ist, zur lösbaren drehmomentübertragenden Verbindung von Antriebsseite (3) und Abtriebsseite (4), aufweist; wobei durch das Verfahren der Elektroantrieb (1) im oder nahe eines Sättigungsbereichs betrieben werden kann, wobei das Verfahren zumindest die folgenden Schritte umfasst:
a. Abschätzen oder Bestimmen einer aktuellen ersten Drehzahl (6) des Elektroantriebs (1); und
b. Vergleichen der aktuellen ersten Drehzahl (6) mit einer Mindestdrehzahl (7), wobei die Mindestdrehzahl (7) die Drehzahl des Elektroantriebs (1) ist, ab der eine Berechnung der Drehzahl und Lage eines Rotors (18) durch ein EMK-Verfahren möglich ist; und, wenn i. die aktuelle erste Drehzahl (6) kleiner als die Mindestdrehzahl (7) ist, oder
ii. zusätzlich ein aktuelles Drehmoment (8) des Elektroantriebs (1), also ein durch die Abtriebsseite (4) aktuell gefordertes Drehmoment, größer ist als ein Grenzmoment (9), wobei das Grenzmoment (9) das Drehmoment ist, bis zu dem, bis zu einer Mindestdrehzahl (7) ausgehend vom Stillstand des Rotors (18), die Lage und die Drehzahl des Elektroantriebs (1) hinreichend genau durch ein Anisotropie-Verfahren berechnet werden kann;
c. Beschleunigen des Elektroantriebs (1) auf mindestens die Mindestdrehzahl (7) und Regelung einer abtriebsseitigen zweiten Drehzahl (10) und/oder des abtriebsseitigen Drehmoments durch Betrieb der Kupplung (5) mit Schlupf, also mit teilweise geöffneter Kupplung (5), wobei ein Drehmoment der Antriebsseite (3) bei teilweise geöffneter Kupplung (5) teilweise zur Abtriebsseite (4) übertragen wird; so dass zumindest ein dritter Bereich (26), in dem das aktuelle Drehmoment (8) größer als das Grenzdrehmoment (9) und die aktuelle erste Drehzahl (6) kleiner als die Mindestdrehzahl (7) ist, gezielt umgangen wird.

2. Verfahren nach Patentanspruch 1, wobei das Verfahren, wenn die aktuelle erste Drehzahl (6) kleiner als eine Mindestdrehzahl (7) ist und das aktuelle Drehmoment (8) dem Grenzmoment (9) entspricht oder kleiner ist, den folgenden Schritt umfasst:
d. Berechnen einer tatsächlichen dritten Drehzahl (11) des Elektroantriebs (1) durch ein Anisotropieverfahren und Regelung des Elektroantriebs (1) anhand der so berechneten dritten Drehzahl (11).

3. Verfahren nach einem der vorhergehenden Patentansprüche, wobei das Verfahren, sobald die erste Drehzahl (6) oder eine dritte Drehzahl (11) mindestens der Mindestdrehzahl (7) entspricht, zumindest den weiteren folgenden Schritt umfasst:
e. Berechnen einer tatsächlichen vierten Drehzahl (12) des Elektroantriebs (1) durch ein EMK-Verfahren und Regelung des Elektroantriebs (1) anhand der so berechneten vierten Drehzahl (12).

4. Verfahren nach einem der vorhergehenden Patentansprüche, wobei die aktuelle erste Drehzahl (6) des Elektroantriebs (1) unter Berücksichtigung einer zweiten Drehzahl (10) der Abtriebsseite (4) abgeschätzt oder bestimmt wird.

5. Verfahren nach einem der vorhergehenden Patentansprüche, wobei die zweite Drehzahl (10) durch einen Drehzahlsensor (13) an der Abtriebsseite (4) bestimmt wird.

6. Antriebsstrang (2), zumindest umfassend einen Elektroantrieb (1) als Antriebsseite (3), eine Abtriebsseite (4) sowie dazwischen angeordnet eine Kupplung (5), zur lösbaren drehmomentübertragenden Verbindung von Antriebsseite (3) und Abtriebsseite (4), wobei die Kupplung (5) eine Reibungskupplung ist, die für einen Betrieb mit Schlupf geeignet ist, sowie eine Regeleinheit (14), die zur Durchführung des Verfahrens nach einem der vorhergehenden Patentansprüche geeignet und eingerichtet ist und die zur Erfassung der für ein EMK-Verfahren und/oder Anisotropieverfahren benötigten Größen (15) mit dem Elektroantrieb (1) verbunden ist.

7. Antriebsstrang (2) nach Patentanspruch 6, wobei der Elektroantrieb (1) lagegeberlos ist, so dass eine Lage (16) und eine Drehzahl (17) eines Rotors (18) des Elektroantriebs (1) ausschließlich durch ein EMK-Verfahren oder zusätzlich durch ein Anisotropieverfahren bestimmbar ist.

8. Antriebsstrang (2) nach Patentanspruch 6 oder 7, wobei der Antriebsstrang (2) ein Teil einer Antriebskomponente (20) zum Antrieb eines Kraftfahrzeuges (21) ist.

9. Kraftfahrzeug (21) mit einem Antriebstrang (2) nach Patentanspruch 8.

## Claims

1. Method for controlling an electric drive (1) in a drive train (2) which has at least one electric drive (1) at a drive end (3), an output end (4), and a clutch (5) which is arranged between them and is a friction clutch, for connecting the drive end (3) and output end (4) in a releasable, torque-transmitting fashion, wherein the electric drive (1) can be operated at or close to a saturation range by the method, wherein the method comprises at least the following steps:
a. estimating or determining a current first rotational speed (6) of the electric drive (1); and
b. comparing the current first rotational speed (6) with a minimum rotational speed (7), wherein the minimum rotational speed (7) is the rotational speed of the electric drive (1) at and above which it is possible to calculate the rotational speed and position of a rotor (18) by means of an EMF method, and if
i. the current first rotational speed (6) is lower than the minimum rotational speed (7) or
ii. a current torque (8) of the electric drive (1), that is to say a torque which is currently requested by the output end (4) is additionally higher than a limiting torque (9), wherein the limiting torque (9) is the torque up to which the position and the rotational speed of the electric drive (1) can be calculated sufficiently precisely by means of an anisotropy method, up to a minimum rotational speed (7) starting from the stationary state of the rotor (18);
c. accelerating the electric drive (1) to at least the minimum rotational speed (7) and means for controlling an output-end second rotational speed (10) and/or the output-end torque by operating the clutch (5) with slip, that is to say with a partially opened clutch (5), wherein a torque of the drive end (3) is transmitted partially to the output end (4) with the clutch (5) partially opened, so that at least a third region (26) in which the current torque (8) is higher than the limiting torque (9) and the current first rotational speed (6) is lower than the minimum rotational speed (7) is selectively bypassed.

2. Method according to Patent Claim 1, wherein if the current first rotational speed (6) is lower than a minimum rotational speed (7) and the current torque (8) corresponds to the limiting torque (9) or is lower, the method comprises the following step:
d. calculating an actual third rotational speed (11) of the electric drive (1) by means of an anisotropy method and controlling the electric drive (1) on the basis of the third rotational speed (11) which is calculated in this way.

3. Method according to one of the preceding patent claims, wherein as soon as the first rotational speed (6) or a third rotational speed (11) corresponds at least to the minimum rotational speed (7), the method comprises at least the further following step:
e. calculating an actual fourth rotational speed (12) of the electric drive (1) by means of an EMF method and controlling the electric drive (1) on the basis of the fourth rotational speed (12) which is calculated in this way.

4. Method according to one of the preceding patent claims, wherein the current first rotational speed (6) of the electric drive (1) is estimated or determined taking into account a second rotational speed (10) of the output end (4).

5. Method according to one of the preceding patent claims, wherein the second rotational speed (10) is determined by means of a rotational speed sensor (13) at the output end (4).

6. Drive train (2) at least comprising an electric drive (1) as a drive end (3), an output end (4) and a clutch (5) which is arranged between them, for connecting the drive end (3) and output end (4) in a releasable, torque-transmitting fashion, wherein the clutch (5) is a friction clutch which is suitable for operating with slip, and a control unit (14) which is suitable and configured for carrying out the method according to one of the preceding patent claims and which is connected to the electric drive (1) in order to detect the variables (15) which are required for an EMF method and/or an anisotropy method.

7. Drive train (2) according to Patent Claim 6, wherein the electric drive (1) is without a position encoder, so that a position (16) and a rotational speed (17) of a rotor (18) of the electric drive (1) can be determined exclusively by means of a EMF method or additionally by means of an anisotropy method.

8. Drive train (2) according to Patent Claim 6 or 7, wherein the drive train (2) is part of a drive component (20) for driving a motor vehicle (21).

9. Motor vehicle (21) having a drive train (2) according to Patent Claim 8.

## Revendications

1. Procédé de régulation d'un entraînement électrique (1) dans une chaîne cinématique (2), qui comporte au moins l'entraînement électrique (1) sur un côté entraînement (3), un côté sortie (4) et un embrayage (5) qui est disposé entre ceux-ci et qui est un embrayage à friction, pour établir une liaison de transmission de couple amovible du côté entraînement (3) et du côté sortie (4) ; le procédé permettant le fonctionnement de l'entraînement électrique (1) dans la plage de saturation ou au voisinage de celle-ci, le procédé comprenant au moins les étapes suivantes :
a. estimer ou déterminer une première vitesse de rotation actuelle (6) de l'entraînement électrique (1) ; et
b. comparer la première vitesse de rotation actuelle (6) avec une vitesse de rotation minimale (7), la vitesse de rotation minimale (7) étant la vitesse de rotation de l'entraînement électrique (1) à partir de laquelle un calcul de la vitesse de rotation et de la position d'un rotor (18) est possible à l'aide d'un procédé FEM ; et si
i. la première vitesse de rotation actuelle (6) est inférieure à la vitesse de rotation minimale (7), ou
ii. en plus, un couple actuel (8) de l'entraînement électrique (1), c'est-à-dire un couple actuellement requis par le côté sortie (4), est supérieur à un couple limite (9), le couple limite (9) étant le couple jusqu'auquel, jusqu'à une vitesse de rotation minimale (7) à partir de l'arrêt du rotor (18), la position et la vitesse de rotation de l'entraînement électrique (1) peuvent être calculées avec une précision suffisante par un procédé d'anisotropie ;
c. accélérer l'entraînement électrique (1) jusqu'à au moins la vitesse de rotation minimale (7) et réguler une deuxième vitesse de rotation côté sortie (10) et/ou du couple côté sortie par actionnement de l'embrayage (5) avec glissement, c'est-à-dire avec l'embrayage (5) partiellement ouvert, un couple du côté entraînement (3) étant partiellement transmis au côté sortie (4) lorsque l'embrayage (5) est partiellement ouvert, de façon à contourner de manière ciblée au moins une troisième zone (26) dans laquelle le couple actuel (8) est supérieur au couple limite (9) et la première vitesse de rotation actuelle (6) est inférieure à la vitesse minimale (7).

2. Procédé selon la revendication 1, le procédé, lorsque la première vitesse de rotation actuelle (6) est inférieure à une vitesse de rotation minimale (7) et que le couple actuel (8) correspond ou est inférieur au couple limite (9), comprenant l'étape suivante :
d. calculer une troisième vitesse de rotation réelle (11) de l'entraînement électrique (1) par un procédé d'anisotropie et réguler l'entraînement électrique (1) sur la base de la troisième vitesse de rotation (11) ainsi calculée.

3. Procédé selon l'une des revendications précédentes, le procédé, dès que la première vitesse de rotation (6) ou une troisième vitesse de rotation (11) correspond à au moins la vitesse de rotation minimale (7), comprenant au moins l'étape supplémentaire suivante :
e. calculer une quatrième vitesse de rotation réelle (12) de l'entraînement électrique (1) à l'aide d'un procédé FEM et réguler l'entraînement électrique (1) sur la base de la quatrième vitesse de rotation (12) ainsi calculée.

4. Procédé selon l'une des revendications précédentes, la première vitesse de rotation actuelle (6) de l'entraînement électrique (1) étant estimée ou déterminée avec prise en compte d'une deuxième vitesse de rotation (10) du côté sortie (4).

5. Procédé selon l'une des revendications précédentes, la deuxième vitesse de rotation (10) étant déterminée par un capteur de vitesse de rotation (13) du côté sortie (4).

6. Chaîne cinématique (2) qui comprend au moins un entraînement électrique (1) comme côté entraînement (3), un côté sortie (4) ainsi qu'un embrayage (5) disposé entre ceux-ci et qui est destinée à établir la liaison de transmission de couple amovible du côté entraînement (3) et du côté sortie (4), l'embrayage (5) étant un embrayage à friction qui est approprié pour fonctionner avec glissement, ainsi qu'une unité de commande (14) qui est appropriée et adaptée pour mettre en œuvre le procédé selon l'une des revendications précédentes et qui est reliée à l'entraînement électrique (1) pour détecter les grandeurs (15) qui sont nécessaires à un procédé FEM et/ou un procédé d'anisotropie.

7. Chaîne cinématique (2) selon la revendication 6, l'entraînement électrique (1) étant dépourvu de capteur de position de sorte qu'une position (16) et une vitesse de rotation (17) d'un rotor (18) de l'entraînement électrique (1) peuvent être déterminées exclusivement par un procédé FEM ou en plus par un procédé d'anisotropie.

8. Chaîne cinématique (2) selon la revendication 6 ou 7, la chaîne cinématique (2) faisant partie d'un composant d'entraînement (20) destiné à entraîner un véhicule automobile (21).

9. Véhicule automobile (21) comprenant une chaîne cinématique (2) selon la revendication 8.
